# EUROPEAN PATENT SPECIFICATION

(11) **EP 2 111 354 B1**
(45) Date of publication and mention of the grant of the patent: **15.06.2011**
(21) Application number: 07734424.0
(22) Date of filing: 20.04.2007
(51) Int. Cl.: B62M 3/08

(54) **HIGH EFFICIENCY PEDALLING DEVICE**
HOCHLEISTUNGSPEDALVORRICHTUNG
DISPOSITIF DE PEDALAGE A HAUT RENDEMENT

(30) Priority: 29.09.2006 IT MI20061879
(43) Date of publication of application: 28.10.2009
(73) Proprietor: Specialities S.r.l., 24046 Osio Sotto (IT)
(72) Inventor: COZZO, Francesco, 28100 Novara (IT)
(74) Representative: Modiano, Micaela Nadia
(86) International application number: PCT/IB2007/001106
(87) International publication number: WO 2008/038073

(56) References cited:
- WO-A-93/21058
- WO-A1-2006/030262

## Description

### Technical Field

The present invention relates to a high efficiency pedaling device.

More particularly, the invention relates to a pedaling device which allows to optimize the distribution of efforts through the human body during the act of pedaling and the consequent efficiency of the forces applied to the pedal when the device is installed on a pedal-operated apparatus.

In the present description, the expression "pedal-operated apparatus" or "cycling apparatus" is used to reference any type of bicycle: road or track racing bicycle, mountain bike, cruiser bike; stationary bike, exercise bike, underwater exercise bike or the like.

### Background Art

A cycling device is known which comprises a base which can be associated with the pedal crank of a pedal-operated apparatus, a rod-like element which has a first end articulated to the base and a second end provided with contact means for a front portion of the leg of a user and means for adjusting and locking the angular position of the rod-like element with respect to the base.

This known device assumes an inactive configuration, in which the rod-like element is disengaged from the leg of a user and the contact means are disengaged from the front portion of said leg, and an active configuration, in which the rod-like element is rigidly coupled to the leg of the cyclist and the contact means are engaged with the front portion of the leg.

The adjustment and locking means keep the angle between the leg and the foot of the user substantially fixed during the pedaling stroke, particularly during the pushing step.

This known device further comprises lever means for locking the device temporarily in the inactive configuration, which are adapted to be operated by the foot of the user while in contact on the base to release the inactive configuration.

Although this known device has proved itself useful in assisting the steps of the pedaling stroke, it can nonetheless be improve as regards control of the relative position of the foot and leg.

It has in fact been observed that locking the angle formed between the leg and the foot does not allow to utilize in the best possible way the pushing actions performed by the user and entails a less than optimum distribution of efforts affecting the body, particularly the lower limbs, of the user.

WO 2006/030262 discloses a cycling device according to the preamble of claim 1, for controlling the relative position of the leg and the foot. The device comprises a base, which can be associated with an item of footwear or a pedal of a cycling vehicle, a rod-like element, which has a first end articulated so that it can rotate about a first axis, which is substantially perpendicular to the plane on which the circular motion of the pedal occurs, and a second end, which is provided with supporting means for a front portion of a leg of a cyclist, and means for adjusting and locking the angular position of said rod-like element with respect to the base, the rod-like element being adapted to keep the angle formed between the leg and the foot of the cyclist substantially fixed at least during the pushing step of a pedaling stroke.

### Disclosure of the Invention

The aim of the present invention is to provide a pedaling device for controlling the relative position of the leg and foot which allows to optimize the efficiency of the muscle action of the user on the pedal, thus improving the pedaling stroke.

Within this aim, an object of the present invention is to provide a pedaling device which allows to improve the distribution of efforts affecting the body and in particular the lower limbs of the user.

Another object of the present invention is to provide a pedaling device which is controlled by the pushing movement of the leg-foot system and allows to follow the pedaling movement.

Another object of the present invention is to provide a pedaling device which has a simple structure, is relatively easy to provide in practice, safe in use, effective in operation, and has a relatively low cost.

This aim and these and other objects, which will become better apparent hereinafter, are achieved by the present high efficiency pedaling device according to claim 1.

### Brief description of the drawings

Further characteristics and advantages of the present invention will become better apparent from the following detailed description of some preferred but not exclusive embodiments of a high efficiency pedaling device according to the invention, illustrated by way of non-limiting example in the accompanying drawings, wherein:
Figure 1 is a perspective view of a pedal-operated apparatus with the pedaling device according to the invention applied thereto;
Figure 2 is a partially exploded perspective view of the pedal-operated apparatus of Figure 1;
Figures 3 and 4 are respectively exploded and assembled perspective views of a first embodiment of the pedaling device according to the invention;
Figures 5 and 6 are enlarged-scale views of a detail of the pedal of a device according to the invention;
Figures 7 and 8 are respectively exploded and assembled perspective views of a second embodiment of the pedaling device according to the invention;
Figures 9 and 10 are respectively exploded and assembled perspective views of a third embodiment of the pedaling device according to the invention;
Figure 11 is an enlarged-scale view of a detail of the pedal of an alternative embodiment of the pedaling device according to Figures 9 and 10;
Figures 12 and 13 are a side view and a top plan view of a fourth embodiment of the pedaling device according to the invention;
Figures 14 and 15 are respectively exploded and assembled perspective views of a fifth embodiment of the pedaling device according to the invention;
Figure 16 is an exploded perspective view of a device for fastening a shoe to the pedal of the device according to the invention;
Figure 17 is a schematic sectional view of the fastening device of Figure 16;
Figure 18 is a bottom perspective view of a device for fastening a shoe to a pedal;
Figure 19 is an exploded perspective view of the fastening device of Figure 18;
Figure 20 is a schematic sectional view of the fastening device of Figure 18.

### Ways of carrying out the invention

With reference to the figures, the reference numeral 1 generally designates a high efficiency pedaling device.

It is specified that in the present description the expression "pedaling stroke direction" is used to reference the direction of the pedaling stroke in the direction of forward travel of a pedal-operated apparatus.

Further, where spatial arrangements are specified by means of adjectives such as "upper", "lower", "front", "rear" or the like, they are to be referred to the conditions of normal use of the device 1 applied to a pedal-operated apparatus.

Finally, expressions such as "substantially parallel" or "substantially perpendicular" are to be understood respectively as parallel and perpendicular within ordinary tolerances.

The device 1 comprises a pedal 2 which is associable with a pedal crank 3 of a pedal-operated apparatus 4 such as a bicycle, an exercise bike, or the like.

The pedal 2 is associated with the pedal crank 3 so that it can rotate about a pivoting axis 2a which is substantially perpendicular to the plane on which the circular pedaling motion occurs.

The device 1 further comprises a rod-like element 5, which has a first end, which is articulated to the pedal 2 so that it can rotate about a first axis 5a which is substantially parallel to the pivoting axis 2a, and a second end, which is provided with means 6 for the contact of a front portion of the leg of a user.

Elastic means for contrasting the rotation of the rod-like element 5 with respect to the pedal 2 in the direction that corresponds to the pedaling stroke direction are interposed between the pedal 2 and the rod-like element 5.

In a preferred embodiment, said elastic contrast means are integrated in a telescopic bar 7 whose opposite ends are articulated respectively to the rod-like element 5 and to the pedal 2 so as to allow rotation about a respective articulation axis 7a and 7b which is parallel to the pivoting axis 2a.

The telescopic bar 7 is arranged at the front, in the direction of the pedaling stroke, with respect to the rod-like element 5, and the elastic means are interposed between the sliding portions of the telescopic bar 7 to contrast the retraction of said telescopic bar.

The elastic means comprise spring means or a compressible fluid or the like; in practice, the telescopic bar 7 and the elastic means integrated therein constitute a piston and cylinder unit.

However, alternative embodiments of the equivalent elastic means are not excluded.

The pivoting axis 2a of the pedal 2 is arranged in an intermediate position between the first axis 5a of articulation of the first end of the rod-like element 5 to the pedal 2 and the axis of articulation 7b of the end of the telescopic bar 7 to the pedal 2.

The distance D between the pivoting axis 2a of the pedal 2 and the first axis 5a is preferably greater than the distance d between the pivoting axis 2a and the axis of articulation 7b of the end of the telescopic bar 7 to the pedal 2.

The pivoting axis 2a, the first axis 5a and the articulation axes 7a and 7b are each formed by a respective cylindrical hinge 200, 500, 700a and 700b, which is not described in detail since it is known to the person skilled in the art.

At least one of the sliding portions of the telescopic bar 7 comprises length adjustment means 8 of the type with a tensioning element.

The pedal 2 comprises a base 9 in which the cylindrical hinges 200, 500 and 700b, which form the pivoting axis 2a, the first axis 5a and the axis of articulation 7b of the end of the telescopic bar 7 to the pedal 2 are provided.

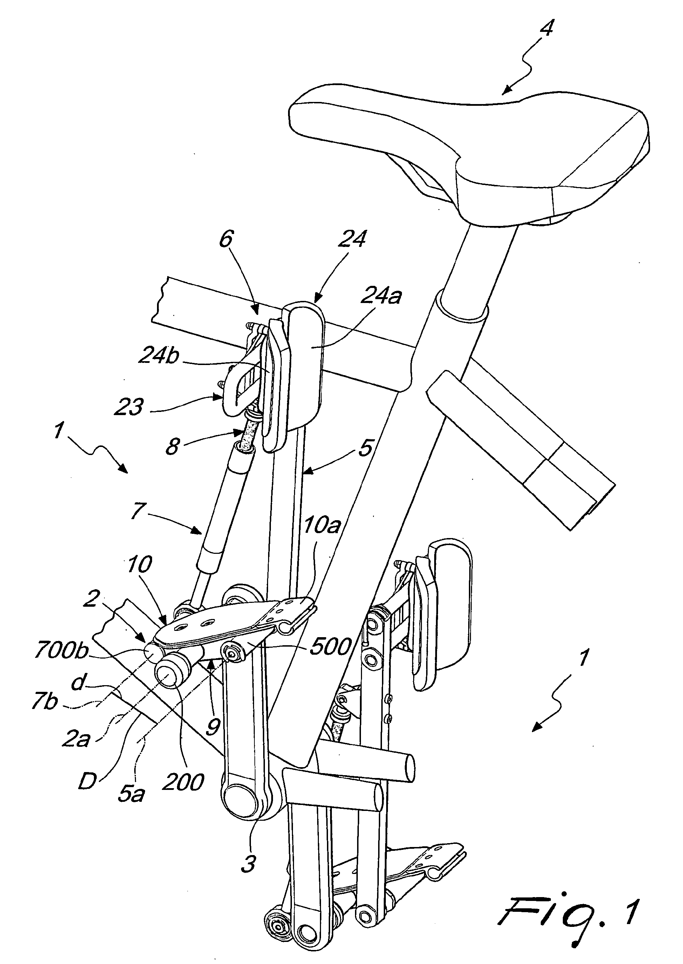

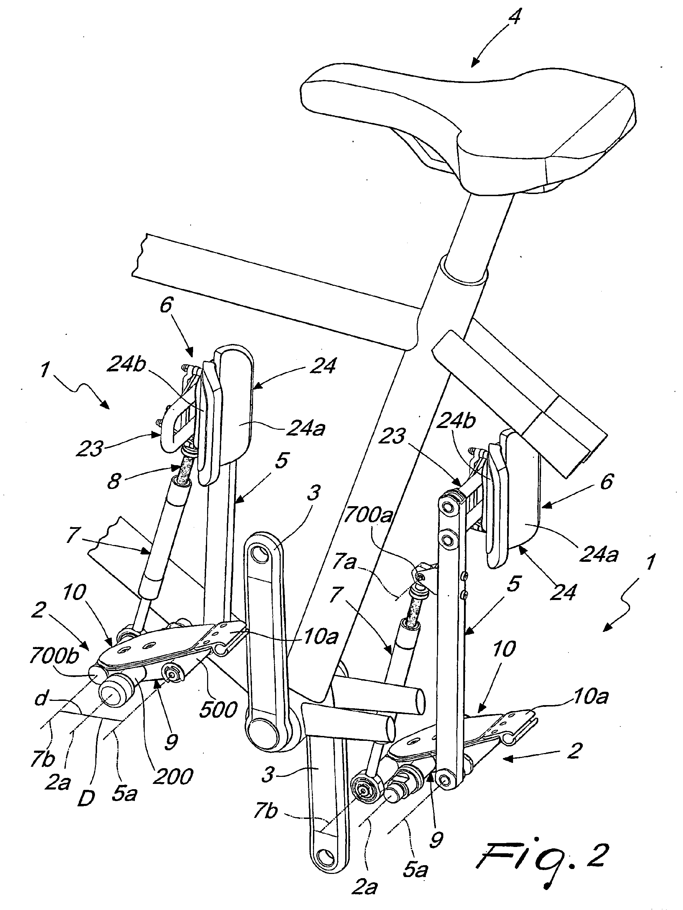

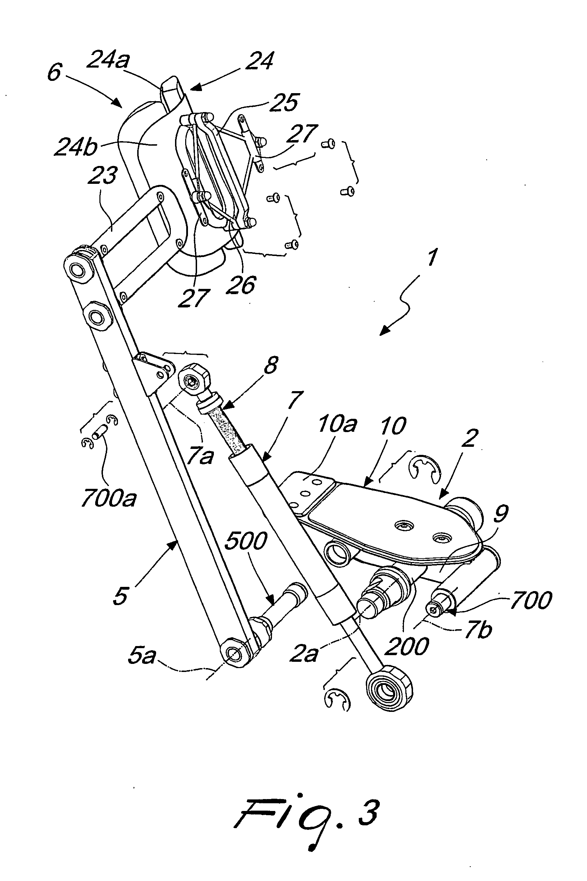

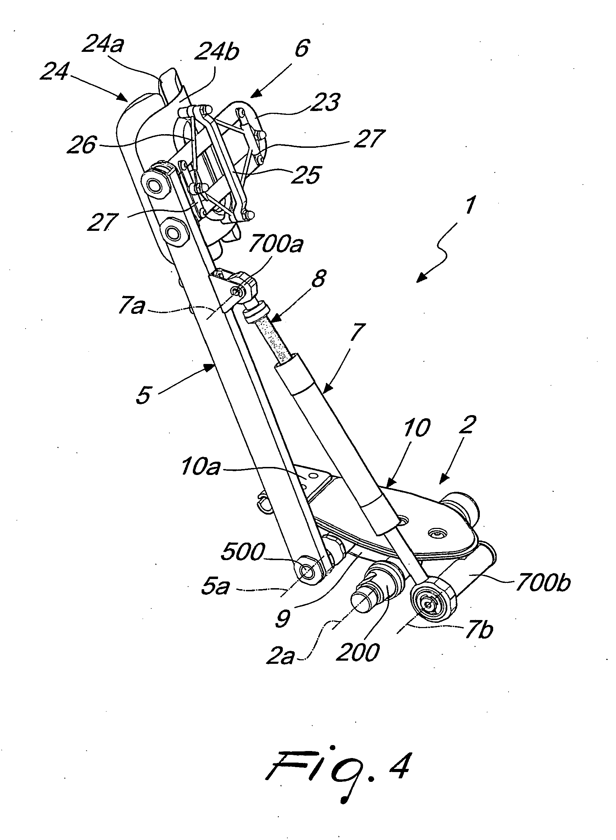

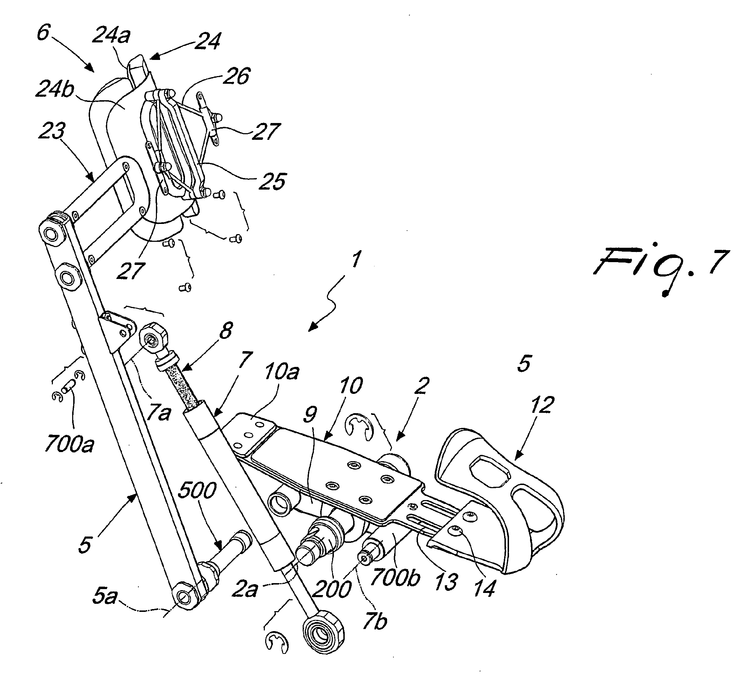

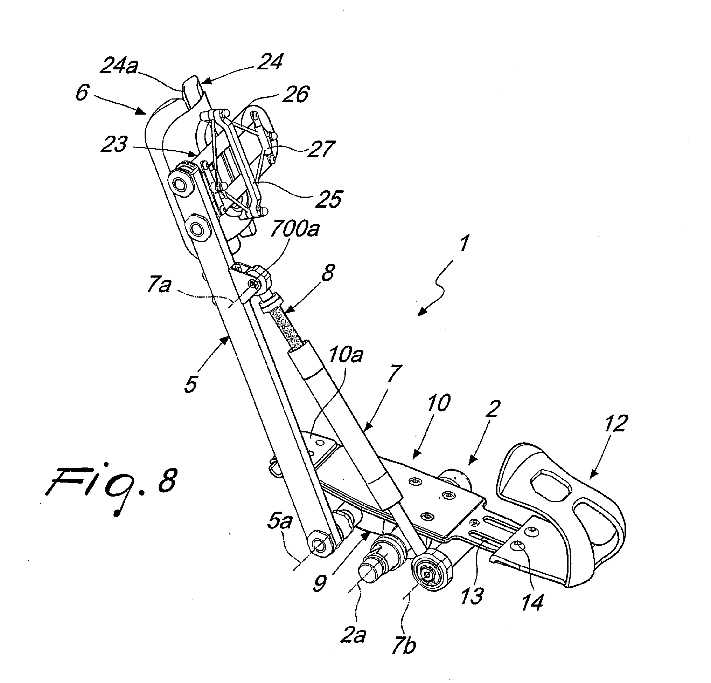

In the embodiments shown in Figures 1-13, on the base 9 there is a topside 10 for contact with the foot of the user. The topside 10 is associated with the base 9 so that it can rotate about an axis of oscillation which is substantially perpendicular to the plane on which the circular pedaling motion occurs and advantageously coincides with the pivoting axis 2a.

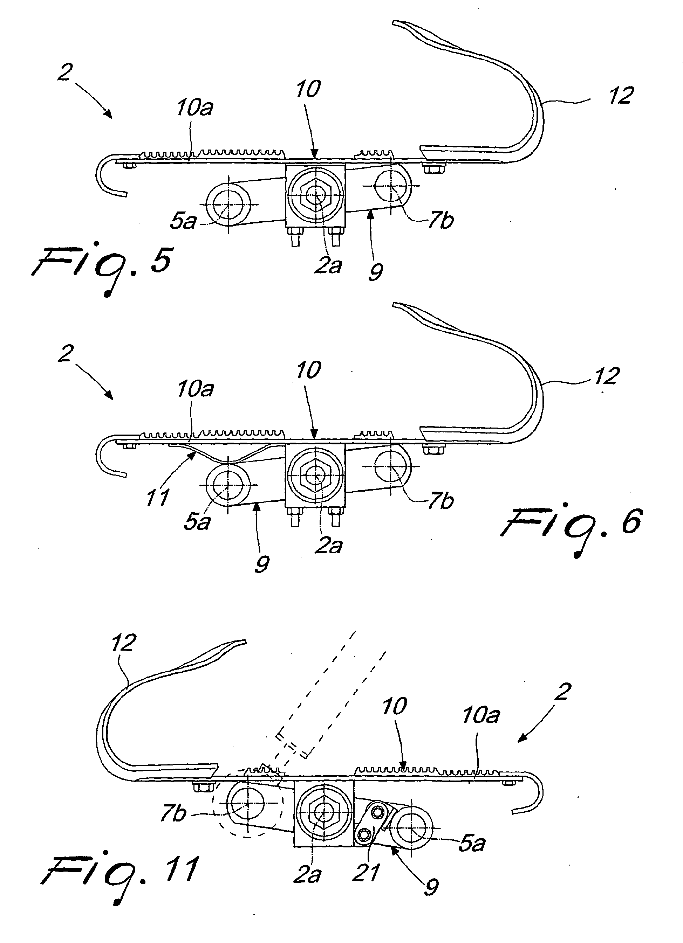

At least one elastic element 11 for contrasting the rotation of the topside 10 in the opposite direction with respect to the pedaling stroke direction is interposed between the base 9 and the topside 10; the elastic element 11 is constituted for example by a laminar sheet which has a curved axis and pushes the topside 10 forward, i.e., in the pedaling stroke direction (Figure 6).

The topside 10 comprises a rear portion 10a, which protrudes like a ledge beyond the base 9, the elastic element 11 being interposed between the base 9 and the rear portion 10a of the topside 10.

The rear portion 10a of the topside 10 is elastically flexible by way of the pushing action applied thereto by the foot of the user; such flexing curves the topside 10 so as to form a convexity or camber on its upper surface.

In an alternative embodiment, not shown in the accompanying figures, a shim is interposed between the base 9 and the rear portion 10a of the topside 10 and is adapted to facilitate the curving of the topside 10.

An element for retaining the foot of the user, such as a toe clip 12, is associated with the front end of the topside 10.

Conveniently, longitudinal slots 13 are provided in the topside 10, and the toe clip 12 is fixed thereto by means of screws 14; the slots 13 and the screws 14 allow to adjust the position of the toe clip 12.

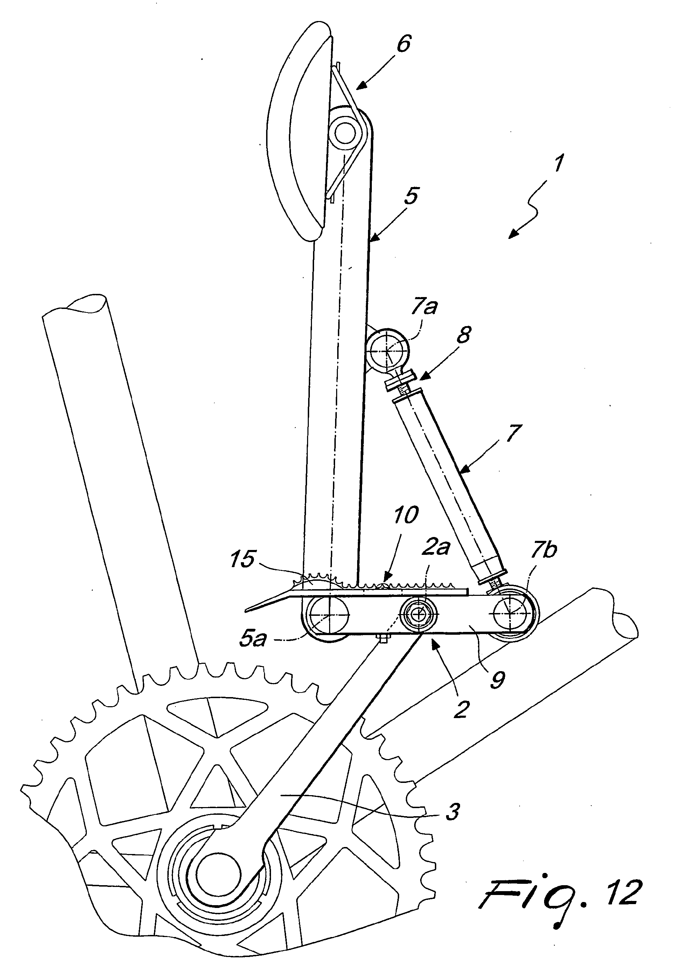

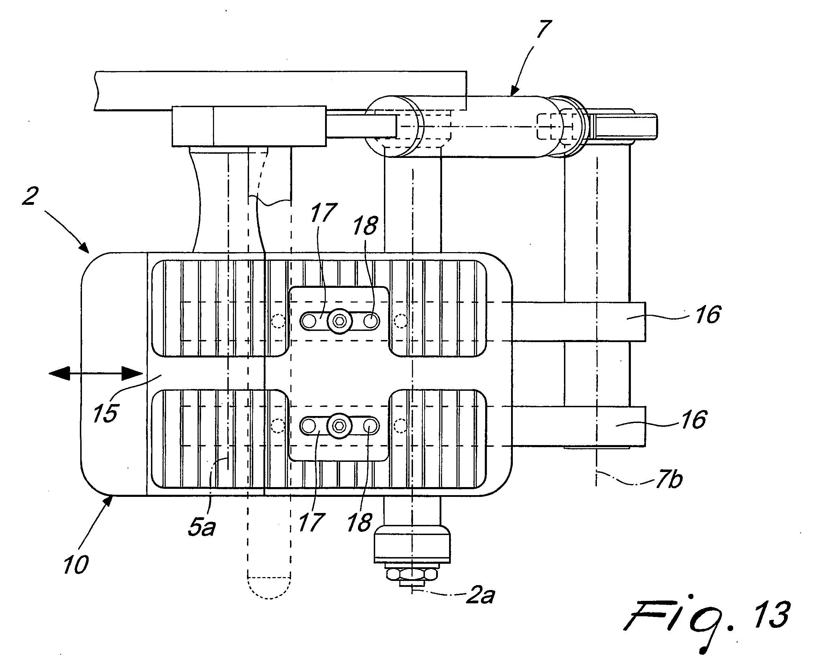

In the embodiment shown in Figures 12 and 13, on the face of the topside 10 that is designed to make contact with the foot there is a protrusion 15 which is arc-like and convex, cylindrical or spherical. Further, in this embodiment on the base 9 there are two guides 16 which are perpendicular to the pivoting axis 2a and with which the topside 10 is associated adjustably. In particular, the topside 10 comprises a corresponding pair of elongated slots 17, in which corresponding screws 18 which engage in the guides 16 are inserted.

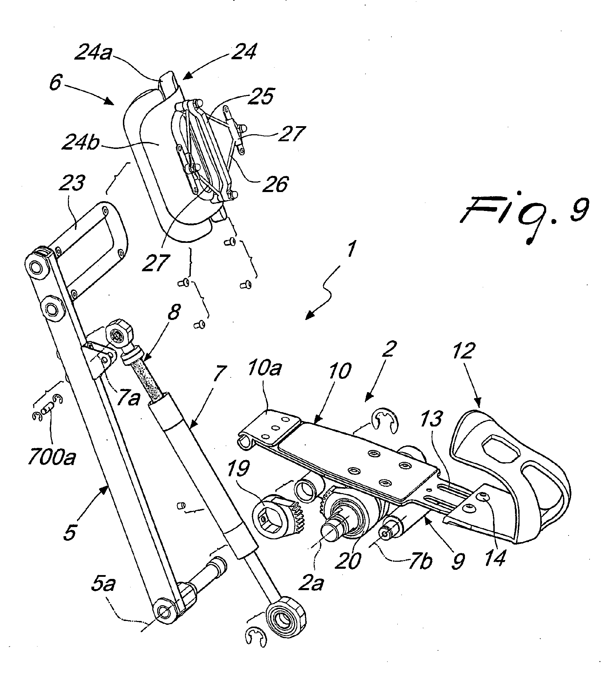

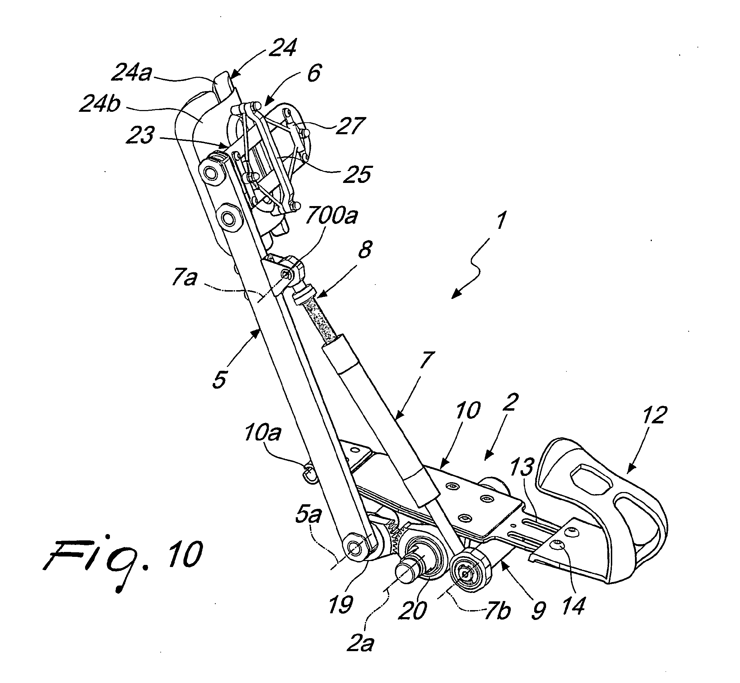

In a preferred embodiment, shown in Figures 9 and 10, the device 1 comprises two toothed sectors 19 and 20 which mesh together: the first toothed sector 19 is rigidly coupled to the first end of the rod-like element 5 and coaxial to the first axis 5a, and the second toothed sector 20 is associated with the pedal 2 so that it can rotate about the pivoting axis 2a.

In an alternative embodiment (Figure 11), the device 1 comprises a linkage element 21, the opposite ends of which are articulated so that they can rotate, about a respective axis which is substantially parallel to the pivoting axis 2a, respectively to the rod-like element 5 proximate to its first end and to the topside 10.

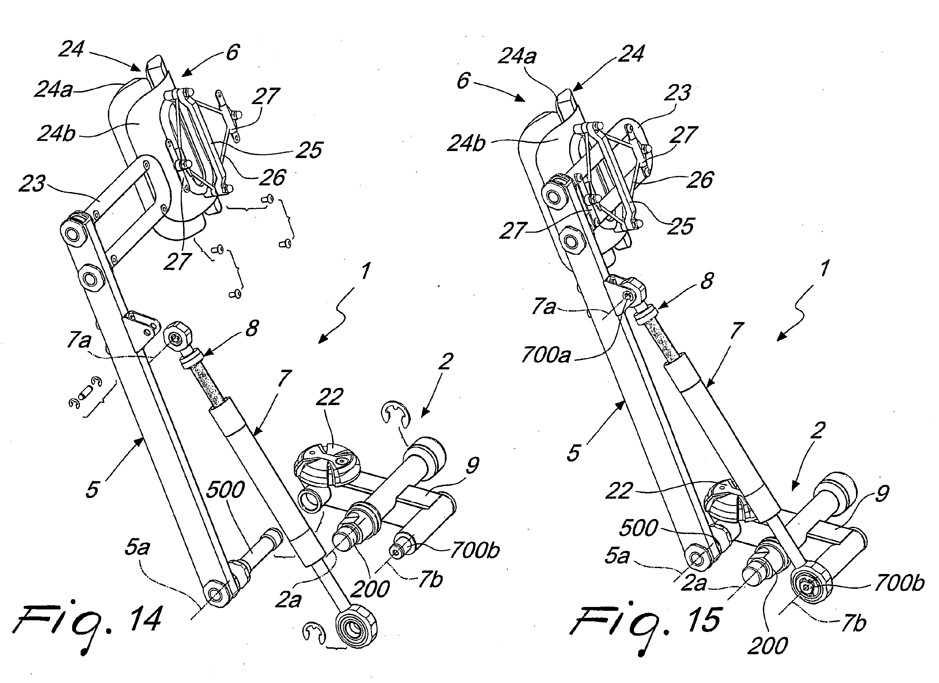

With reference to Figures 14 and 15, the pedal 2 comprises the base 9, on which a device 22 for fastening the shoe of the user is fitted instead of the topside 10.

The fastening device 22 is arranged proximate to the hinge 500 and is of the clipless or magnetic type.

The contact means 6 comprise a support 23 which is associated with the second end, i.e., with the upper end, of the rod-like element 5, and at least one sliding block 24 for sliding contact of the front portion of the leg of the user which is movably associated with the support 23.

The support 23 is constituted by a U-shaped element, which is arranged so that its arms are substantially perpendicular to the rod-like element 5 and to the plane on which the circular pedaling motion occurs.

The upper arm of the U-shape has its end rigidly associated with the rod-like element 5; the lower arm of the U-shape instead has an end which is free, i.e., not coupled to the rod-like element 5, so that a preset distance remains between it and the rod-like element 5.

This distance or discontinuity gives the support 23 a certain degree of elastic flexibility.

The sliding block 24 comprises a front surface 24a, which is concave and against which the front portion of the leg of the user makes contact, and a rear surface 24b, which is convex and rests against the support 23.

The front surface 24a is constituted by two elongated pads, while the rear surface 24b is constituted by a curved shell.

The sliding block 24 is retained so as to make contact with the support 23 by way of supporting means, which are adapted to allow a sliding and/or rotary stroke thereof with respect to the support 23.

In particular, the sliding block 24 can slide, within a preset range, on the plane formed by the support 23 and can oscillate, within a preset range, both with respect to an axis which is parallel to the rod-like element 5 and with respect to an axis which is perpendicular to the rod-like element 5.

These supporting means comprise a transverse bracket 25, which is arranged at the face of the support 23, i.e., of the U-shaped element, that lies opposite the face against which the rear surface 24b of the sliding block 24 makes contact and whose opposite ends are bent at an angle and rigidly coupled to the rear surface 24b of the sliding block 24.

A space is formed between the transverse bracket 25 and the rear surface 24b of the sliding block 24, and the support 23, i.e., the U-shaped element, is inserted therein with play; this space allows the sliding strokes of the sliding block 24.

The supporting means further comprise elastic bindings 26 which retain the sliding block 24 so that it makes contact with the support 23.

The elastic bindings 26 form a polygon in which at least two vertices are rigidly coupled to the support 23 by means of a respective coupling plate 27 and at least two vertices are rigidly coupled to the rear surface 24b of the sliding block 24, these last two vertices being conveniently fixed to the opposite ends of the transverse bracket 25.

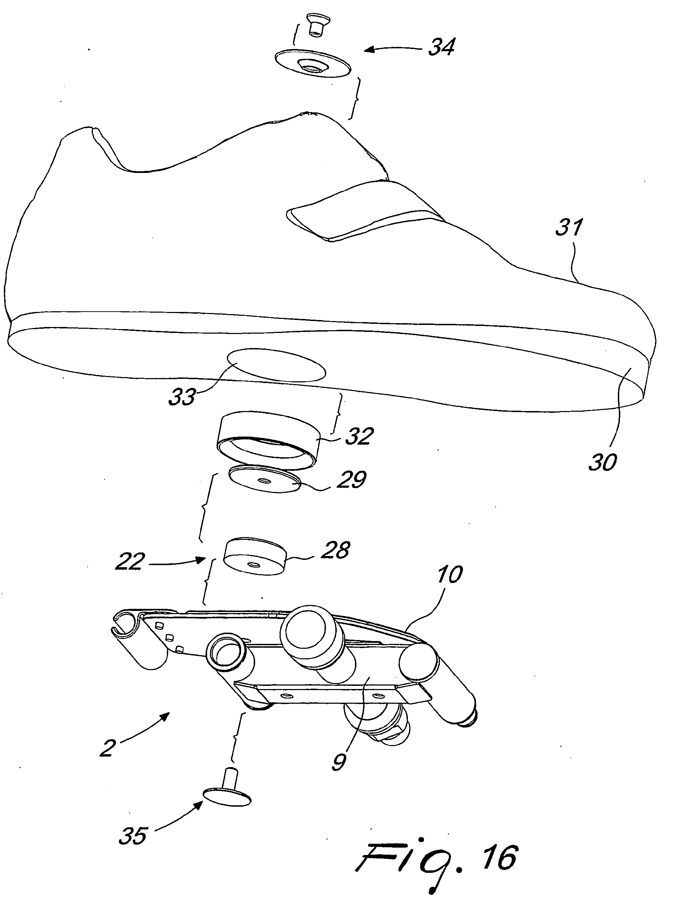

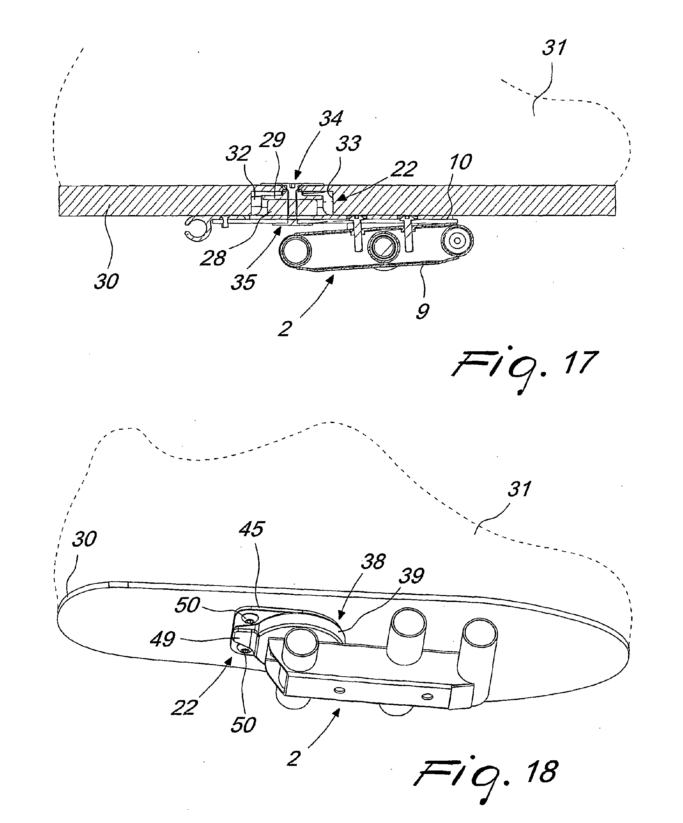

Figures 16 and 17 illustrate a fastening device 22 of the magnetic type, which comprises a magnetic body 28 associated with the upper surface of the pedal 2, particularly with the upper surface of the topside 10, and a body 29 made of ferromagnetic material, which can be associated with the sole 30 of a shoe 31.

Both the magnetic body 28 and the body 29 made of ferromagnetic material are shaped like a circular plate.

The body 29 made of ferromagnetic material is accommodated on the bottom of a cup-shaped containment element 32, which is open toward the magnetic body 28 and is embedded in a cavity 33 formed in the sole 30.

The body 29 made of ferromagnetic material and the corresponding cup-shaped containment element 32 are fixed to the sole 30 by way of fixing means 34 of the removable type. Likewise, the magnetic body 28 is fixed to the pedal 2, i.e. to the topside 10, by way of respective fixing means 35 of the removable type.

The cup-shaped containment element 32 is made of elastically deformable material and is inserted substantially snugly in the corresponding cavity 33. By way of the elasticity of the sole 30 and of the cup-shaped containment element 32, the flexing of the sole 30 during the pedaling motion is absorbed, so that the parallel arrangement of the magnetic body 28 and the body 29 made of ferromagnetic material, and therefore their attraction force, do not undergo significant variations.

In an alternative embodiment, not shown in the accompanying figures since it is easily understandable for the person skilled in the art, there is a cup-shaped containment element for the magnetic body 28 which is fixed to the upper surface of the pedal 2 so that the opening is directed upward, i.e., toward the body 29 made of ferromagnetic material which is fixed to the sole 30.

In the coupling configuration, said cup-shaped containment element for the magnetic body 28 also engages at least partially within the sole 30.

The magnetic body 28 is arranged so that its south pole is directed toward the body 29 made of ferromagnetic material, i.e., upward, and in a preferred embodiment is polarized radially with north and south poles which alternate at a regular distance. In this way it is possible to limit the rotary movements of the shoe with respect to the pedal, by way of the opposition of the magnetic fields involved.

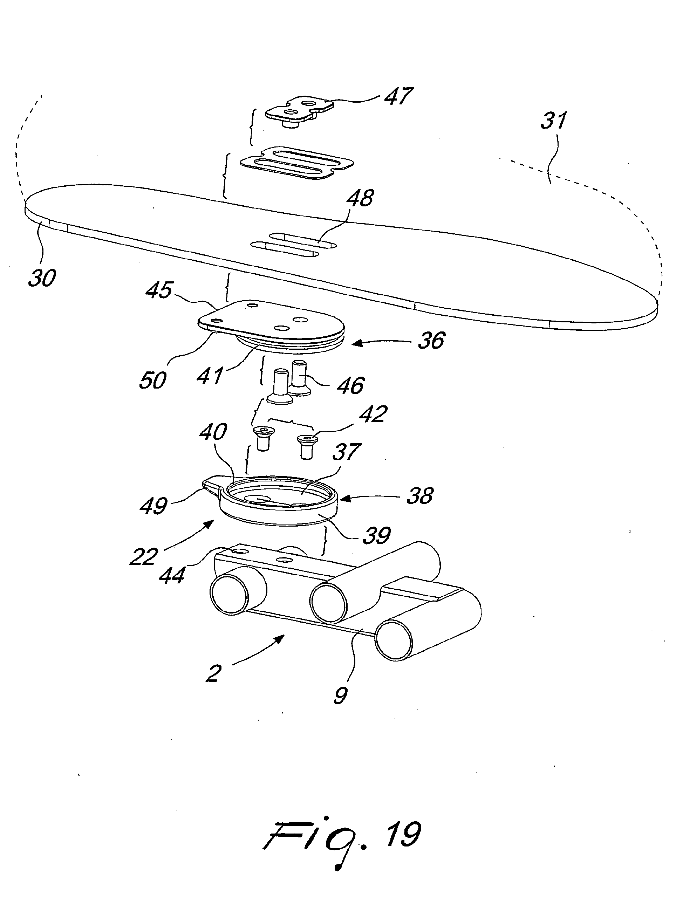

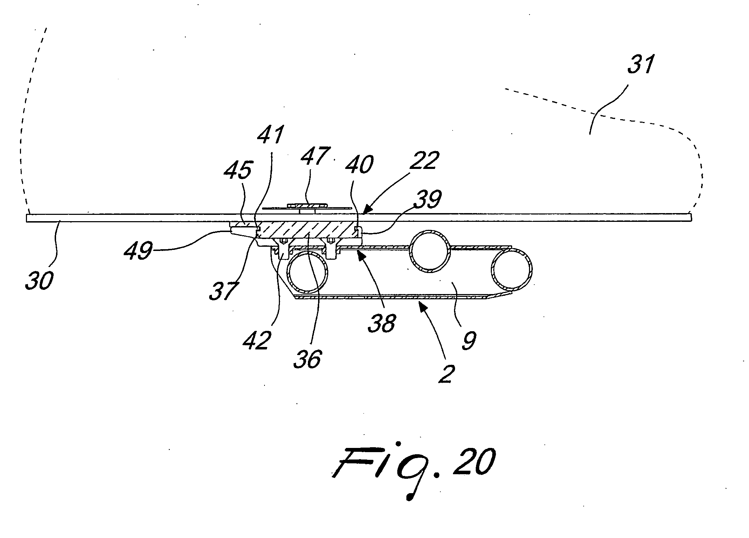

Figures 18-20 illustrate a coupling device 22, which comprises a head 36 which can be associated either with the contact surface of a pedal, particularly of a pedal 2, or the base 9 of a pedal 2, or with the lower surface of the sole 30 of a shoe 31 and can be inserted with a snap action in a receptacle 37 which can be associated respectively with the lower surface of the sole 30 and the contact surface of the pedal 2.

In a preferred embodiment, the head 36 is associated with the lower surface of the sole 30 and the receptacle 37 is fixed to the supporting surface of the pedal 2.

The receptacle 37 is formed by a cylindrical hollow body 38 provided with an upper opening for inserting the head 36 therein. The body 38 is provided with a side wall 39 which is at least partly expandable elastically in a radial direction.

Proximate to the upper edge of the side wall 39 there is at least one retention tooth 40, which extends in a radial direction toward the inside of the body 38 and engages, in the coupling configuration, in a corresponding seat 41 which is formed in the head 36.

The retention tooth 40 also is deformable elastically and has the shape of an annular ridge which protrudes centripetally from the upper edge of the side wall 39.

The body 38 is fixed to the pedal 2 by way of fixing means of the removable type, which are constituted by one or more screws 42 which pass through corresponding holes 43 formed in the bottom of the body 38 and engage respective threaded holes 44 formed within the pedal 2.

The head 36 comprises a plate 45 for coupling to the lower surface of the sole 30 by way of respective fixing means of the removable type, which in the illustrated embodiment comprise one or more screws 46 which pass through the head 36, the coupling plate 45 and the sole 30 to engage in a block 47. In a preferred embodiment, in the sole 30 there are two elongated slots 48 which allow to adjust the coupling position of the head 36.

The head 36 is mushroom-shaped and protrudes from the lower surface of the coupling plate 45.

The seat 41 within which the retention tooth 40 engages with a snap action is constituted by an annular groove which is formed in the head 36, where it blends with the coupling plate 45.

By pushing the head 36 within the receptacle 37 formed by the body 38, the side wall 39 of the latter and/or the retention tooth 40 are deformed elastically, allowing the engagement of the head 36 within the receptacle 37 and the engagement of the retention tooth 40 within the seat 41.

A rotary coupling is formed between the head 36 and the receptacle 37 and is suitable to allow the relative rotation of the head 36 with respect to the body 38 about the longitudinal axis of said head; i.e., about an axis which is perpendicular to the sole 30.

An plastic tab 49 protrudes from the side wall 39 outside the receptacle 37 and toward the heel of the sole 30.

One or more protrusions 50 protrude from the lower face of the coupling plate 45. The protrusions 50 are formed laterally to the head 36 in the region of the coupling plate 45 which is directed toward the heel of the sole 30.

In the ordinary configuration for engagement of the head 36 in the receptacle 37, the protrusion 50 do not interfere with the tab 49.

By turning the head 36 within the receptacle 37, it is possible to make one of the two protrusions 50 interfere with the tab 49 so as to facilitate the uncoupling of the head 36 with respect to the receptacle 37.

The operation of the invention is as follows.

A device 1 is applied to each pedal crank 3 of a pedal-operated apparatus 4.

A user places his feet on the pedals 2 and the front portion of the legs against the contact means 6; during use, each rod-like element 5 lies in front of the respective leg of a user.

The elastic means interposed between the pedal 2 and the rod-like element 5, i.e., the piston-cylinder unit formed by the telescopic bar 7, generate an action which contrasts the forward rotation of the rod-like element 5, i.e., in the pedaling direction, supporting the leg of the user at least during the pushing step of the pedaling stroke, the step during which the angle between the leg and the foot would tend to close.

During the recovery or return stroke of the pedaling action, the elastic energy accumulated by the elastic means, i.e., by the piston-cylinder unit formed by the telescopic bar 7, is released, assisting such step.

The flexing of the rear portion 10a of the topside 10 or the protrusion 15 which protrudes from it and on which the foot rests contribute to the movement.

The device 1 can further be adapted easily to each user by way of the possibility to adjust the length of the telescopic bar 7 and/or the position of the topside 10 and/or the position of the toeclip 12.

In practice it has been found that the described invention achieves the intended aim and objects.

The pedaling device according to the invention in fact allows to assist and follow the pedaling movement of the user in all of its steps, optimizing on the one hand the utilization of the pushing actions performed by the user to actuate the pedal-operated apparatus and on the other hand the distribution of efforts affecting the user, releasing him from tiring loads.

In particular, the device according to the invention does not lock the angle between the leg and the foot but follows its movement in a controlled manner, performing, during the pushing step of the pedaling action, the function of supporting the leg-foot unit and, during the step for recovering the pedal action, a pushing function for the leg-foot unit.

The invention thus conceived is susceptible of numerous modifications and variations, all of which are within the scope of the appended claims.

All the details may further be replaced with other technically equivalent ones.

In practice, the materials used, as well as the shapes and the dimensions, may be any according to requirements without thereby abandoning the scope of the protection of the appended claims.

## Claims

1. A high efficiency pedaling device (1), comprising:
- a pedal (2) which can be associated with the pedal crank (3) of a pedal-operated apparatus (4) so that it can rotate about a pivoting axis (2a) which is substantially perpendicular to the plane on which the circular pedaling motion lies;
- a rod-like element (5), in which a first end is articulated to said pedal (2) so that it can rotate about a first axis (5a) which is substantially parallel to said pivoting axis (2a) and a second end is provided with contact means (6) for contact with a front portion of the leg of a user, and
- elastic means for contrasting the rotation of said rod-like element (5) with respect to said pedal (2) in the pedaling direction, which act between said pedal (2) and said rod-like element (5),
wherein said contact means (6) comprise a support (23) which is associated with said second end of said rod-like element (5) and at least one sliding block (24) for the sliding contact of said front portion of the leg of the user which is movably associated with said support (23),
**characterized in that** said support (23) comprises a U-shaped element, which is arranged so that its arms are substantially perpendicular to said rod-like element (5) and to the plane on which the circular pedaling motion occurs, at least one of said two arms having its end rigidly associated with said rod-like element (5).

2. The device according to claim 1, **characterized in that** both of said two arms have their end rigidly associated with said rod-like element (5)

3. The device according to any of the preceding claims, **characterized in that** it comprises a telescopic bar (7) whose opposite ends are articulated respectively to said rod-like element (5) and said pedal (2) so as to allow rotation about a respective articulation axis (7a, 7b) which is parallel to said pivoting axis (2a).

4. The device according to claim 3, **characterized in that** said telescopic bar (7) is arranged in front, along the pedaling direction, with respect to said rod-like element (5), said elastic means being interposed between the sliding portions of said telescopic bar (7) to contrast the retraction of said telescopic bar (7).

5. The device according to claim 4, **characterized in that** said elastic means comprise spring means or a compressible fluid or the like.

6. The device according to claims 4 or 5, **characterized in that** said pivoting axis (2a) of the pedal (2) is arranged in a position which is intermediate between said first axis (5a) and the axis of articulation of the end of the telescopic bar (7) to said pedal (2).

7. The device according to claim 6, **characterized in that** the distance between said pivoting axis (2a) of the pedal (2) and said first axis (5a) is greater than the distance between said pivoting axis (2a) and the axis of articulation of the end of the telescopic bar (7) to said pedal (2).

8. The device according to one or more of claims 4 to 7, **characterized in that** at least one of the sliding portions of said telescopic bar (7) comprises length adjustment means.

9. The device according to one or more of the preceding claims, **characterized in that** said pedal (2) comprises a base (9) in which said pivoting axis (2a) and said first axis (5a) are formed.

10. The device according to claim 9 and according to one or more of claims 4 to 9, **characterized in that** the axis of articulation of the end of said telescopic bar (7) to said pedal (2) is formed within said base (9).

11. The device according to claim 9 or 10, **characterized in that** said pedal (2) comprises a topside (10) for contact with the foot of a user which is associated with said base (9).

12. The device according to claim 11, **characterized in that** said contact topside (10) is associated with the upper face of said base (9) so that it can rotate about an oscillation axis which is substantially perpendicular to the plane on which the circular pedaling motion occurs.

13. The device according to claim 12, **characterized in that** said oscillation axis coincides with said pivoting axis (2a).

14. The device according to claim 12 or 13, **characterized in that** it comprises at least one elastic element (11) for contrasting the rotation of said topside (10) in the opposite direction with respect to the pedaling direction which is interposed between said base (9) and said topside (10).

## Patentansprüche

1. Hochefifiizienz-Pedalanordnung (1), die Folgendes umfasst:
- ein Pedal (2), das mit einer Tretkurbel (3) eines pedalbetriebenen Geräts (4) verbunden sein kann, so dass es um eine Drehachse (2a) rotieren kann, die im Wesentlichen senkrecht auf der Ebene steht, in der die kreisförmige Pedalbewegung liegt;
- ein stabförmiges Element (5), bei dem ein erstes Ende mit dem Pedal (2) gelenkig verbunden ist, so dass es um eine erste Achse (5a) rotieren kann, die im Wesentlichen parallel zu der Drehachse (2a) liegt, und bei dem ein zweites Ende mit Kontaktmitteln (6) für den Kontakt mit einem vorderen Bereich eines Beins eines Benutzers ausgestattet ist, und
- elastische Mittel um der Rotation des stabförmigen Elementes (5) relativ zu dem Pedal (2) in der Tretrichtung entgegenzuwirken, die zwischen dem Pedal (2) und dem stabförmigen Element (5) wirkt, wobei die Kontaktmittel (6) eine Stütze (23), die mit dem zweiten Ende des stabförmigen Elementes (5) verbunden ist, und wenigstens einen Gleitblock (24) für den gleitenden Kontakt mit dem vorderen Bereich des Beins eines Benutzers umfassen, der beweglich mit der Stütze (23) verbunden ist,
**dadurch gekennzeichnet, dass** die Stütze (23) ein u-förmiges Element umfasst, das so angeordnet ist, dass seine Arme im Wesentlichen senkrecht zu dem stabförmigen Element (5) und zu der Ebene stehen, in der die kreisförmige Pedalbewegung auftritt, wobei wenigstens einer der beiden Arme mit seinem Ende starr mit dem stabförmigen Element (5) verbunden ist.

2. Vorrichtung nach Anspruch 1, **dadurch gekennzeichnet, dass** beide Arme mit ihrem Ende starr mit dem stabförmigen Element (5) verbunden sind.

3. Vorrichtung nach einem der vorstehenden Ansprüche, **dadurch gekennzeichnet, dass** sie eine Teleskopstange (7) umfasst, deren sich gegenüberliegende Enden gelenkig mit dem stabförmigen Element (5) bzw. mit dem Pedal (2) verbunden sind, so dass sie eine Rotation um die jeweilige Gelenkachse (7a, 7b) erlauben, die parallel zu der Drehachse (2a) ist.

4. Vorrichtung nach Anspruch 3, **dadurch gekennzeichnet, dass** die Teleskopstange (7) relativ zu dem stabförmigen Element (5) in Tretrichtung vorne angeordnet ist und die elastischen Mittel zwischen den gleitenden Anteilen der Teleskopstange (7) angeordnet sind, um der Retraktion der Teleskopstange (7) entgegen zu wirken.

5. Vorrichtung nach Anspruch 4, **dadurch gekennzeichnet, dass** die elastischen Mittel Federmittel oder ein kompressibles Fluid oder ähnliches umfassen.

6. Vorrichtung nach Anspruch 4 oder 5, **dadurch gekennzeichnet, dass** die Drehachse (2a) des Pedals (2) in einer Position angeordnet ist, die zwischen der ersten Achse (5a) und der Achse der gelenkigen Anordnung des Endes der Teleskopstange (7) an dem Pedal (2) liegt.

7. Vorrichtung nach Anspruch 6, **dadurch gekennzeichnet, dass** der Abstand zwischen der Drehachse (2a) des Pedals (2) und der ersten Achse (5a) größer ist als der Abstand zwischen der Drehachse (2a) und der Achse der gelenkigen Anordnung des Endes der Teleskopstange (7) an dem Pedal (2).

8. Vorrichtung nach einem oder mehreren der Ansprüche 4 bis 7, **dadurch gekennzeichnet, dass** wenigstens einer der gleitenden Anteile der Teleskopstange (7) Längeneinstellmittel umfasst.

9. Vorrichtung nach einem oder mehreren der vorstehenden Ansprüche, **dadurch gekennzeichnet, dass** das Pedal (2) eine Basis (9) umfasst, in der die Drehachse (2a) und die erste Achse (5a) gebildet sind.

10. Vorrichtung nach Anspruch 9 und nach einem oder mehreren der Ansprüche 4 bis 9, **dadurch gekennzeichnet, dass** die Achse der gelenkigen Anordnung des Endes der Teleskopstange (7) an dem Pedal (2) in der Basis (9) gebildet ist.

11. Vorrichtung nach Anspruch 9 oder 10, **dadurch gekennzeichnet, dass** das Pedal (2) eine Oberseite (10) für den Kontakt mit dem Fuß eines Benutzers umfasst, die mit der Basis (9) verbunden ist.

12. Vorrichtung nach Anspruch 11, **dadurch gekennzeichnet, dass** die Kontaktoberseite (10) mit der oberen Seite der Basis (9) verbunden ist, so dass sie um eine Oszillationsachse rotieren kann, die im Wesentlichen senkrecht auf der Ebene steht, in der die kreisförmige Tretbewegung auftritt.

13. Vorrichtung nach Anspruch 12, **dadurch gekennzeichnet, dass** die Oszillationsachse mit der Drehachse (2a) zusammenfällt.

14. Vorrichtung nach Anspruch 12 oder 13, **dadurch gekennzeichnet, dass** sie wenigstens ein elastisches Element (11) umfasst, um der Rotation der Oberseite (10) in einer der Tretrichtung entgegen gesetzten Richtung entgegen zu wirken, das zwischen der Basis (9) und der Oberseite (10) angeordnet ist.

## Revendications

1. Dispositif de pédalage à haut rendement (1), comprenant :
- une pédale (2) qui peut être associée à la manivelle (3) de pédale d'un appareil (4) actionné par des pédales de façon à pouvoir tourner autour d'un axe de pivotement (2a) sensiblement perpendiculaire au plan dans lequel se situe le mouvement circulaire de pédalage;
- un élément analogue à une tige (5), dont une première extrémité est articulée avec ladite pédale (2) de façon à pouvoir tourner autour d'un premier axe (5a) sensiblement audit axe de pivotement (2a) et une seconde extrémité est pourvue de moyens de contact (6) pour le contact avec une partie avant de la jambe d'un utilisateur, et
- des moyens élastiques pour contrarier la rotation dudit élément analogue à une tige (5) par rapport à ladite pédale (2) dans le sens du pédalage, lesquels agissent entre ladite pédale (2) et ledit élément analogue à une tige (5),
dans lequel lesdits moyens de contact (6) comportent un support (23) associé à ladite seconde extrémité dudit élément analogue à une tige (5) et au moins un bloc coulissant (24) pour le contact coulissant de ladite partie avant de la jambe de l'utilisateur, lequel est associé d'une manière mobile avec ledit support (23), **caractérisé en ce que** ledit support (23) comporte un élément en U, qui est agencé de façon que ses branches soient sensiblement perpendiculaires audit élément analogue à une tige (5) et au plan dans lequel a lieu le mouvement circulaire de pédalage, l'extrémité d'au moins une desdites deux branches faisant corps avec ledit élément analogue à une tige (5).

2. Dispositif selon la revendication 1, **caractérisé en ce que** l'extrémité de chacune desdites deux branches fait corps avec ledit élément analogue à une tige (5),

3. Dispositif selon l'une quelconque des revendications précédentes, **caractérisé en ce qu'**il comprend une barre télescopique (7) dont les extrémités opposées sont respectivement articulées avec ledit élément analogue à une tige (5) et avec ladite pédale (2) de manière à permettre la rotation autour d'un axe d'articulation respectif (7a, 7b) parallèle audit axe de pivotement (2a).

4. Dispositif selon la revendication 3, **caractérisé en ce que** ladite barre télescopique (7) est disposée à l'avant, dans le sens du pédalage, par rapport audit élément analogue à une tige (5), lesdits moyens élastiques étant intercalés entre les parties coulissantes de ladite barre télescopique (7) afin de contrarier la rentrée de ladite barre télescopique (7).

5. Dispositif selon la revendication 4, **caractérisé en ce que** lesdits moyens élastiques sont constitués par des moyens formant ressorts ou un fluide compressible ou autre.

6. Dispositif selon la revendication 4 ou 5, **caractérisé en ce que** ledit axe de pivotement (2a) de la pédale (2) est disposé dans une position intermédiaire entre ledit premier axe (5a) et l'axe d'articulation des l'extrémité de la barre télescopique (7) avec ladite pédale (2).

7. Dispositif selon la revendication 6, **caractérisé en ce que** la distance entre ledit axe de pivotement (2a) de la pédale (2) et ledit premier axe (5a) est supérieure à la distance entre ledit axe de pivotement (2a) et l'axe d'articulation de l'extrémité de la barre télescopique (7) avec ladite pédale (2).

8. Dispositif selon une ou plusieurs des revendications 4 à 7, **caractérisé en ce qu'**au moins une des parties coulissantes de ladite barre télescopique (7) comporte un moyen de réglage de longueur.

9. Dispositif selon une ou plusieurs des revendications précédentes, **caractérisé en ce que** ladite pédale (2) comporte une base (9) dans laquelle sont formés ledit axe de pivotement (2a) et ledit premier axe (5a).

10. Dispositif selon la revendication 9 et selon une ou plusieurs des revendications 4 à 9, **caractérisé en ce que** l'axe d'articulation de l'extrémité de ladite barre télescopique (7) avec ladite pédale (2) est formé dans ladite base (9).

11. Dispositif selon la revendication 9 ou 10, **caractérisé en ce que** ladite pédale (2) comporte une face supérieure (10) pour le contact avec le pied d'un utilisateur, laquelle est associée à ladite base (9).

12. Dispositif selon la revendication 11, **caractérisé en ce que** ladite face supérieure de contact (10) est associée à la face supérieure de ladite base (9) de façon à pouvoir tourner autour d'un axe d'oscillation sensiblement perpendiculaire au plan dans lequel à lieu le mouvement circulaire de pédalage.

13. Dispositif selon la revendication 12, **caractérisé en ce que** ledit axe d'oscillation coïncide avec ledit axe de pivotement (2a).

14. Dispositif selon la revendication 12 ou 13, **caractérisé en ce qu'**il comprend au moins un élément élastique (11) pour contrarier la rotation de ladite face supérieure (10) dans le sens opposé par rapport au sens du pédalage, lequel est intercalé entre ladite base (9) et ladite face supérieure (10).
